# EUROPEAN PATENT SPECIFICATION

(11) **EP 0 290 281 B1**
(45) Date of publication and mention of the grant of the patent: **21.07.1993**
(21) Application number: 88304141.0
(22) Date of filing: 06.05.1988
(51) Int. Cl.: G11B 11/10, G11B 13/04

(54) **Apparatus for giving auxiliary magnetic field**
Gerät zur Bildung eines magnetischen Hilfsfeldes
Appareil pour établir un champ magnétique auxiliaire

(30) Priority: 08.05.1987 JP 113384/87
(43) Date of publication of application: 09.11.1988
(73) Proprietor: SHARP KABUSHIKI KAISHA, Osaka 545 (JP)
(72) Inventor: Minami, Shigenobu Hisasi, Kaizuka-shi Osaka fu (JP); Kobayashi, Shozo, Nara-shi Nara-ken (JP); Deguchi, Toshihisa, Nara-shi Nara-ken (JP); Nishioka, Yoshiki, Tenri-shi Nara-ken (JP)
(74) Representative: Brown, Kenneth Richard

(56) References cited:
- EP-A- 0 222 916
- DE-A- 3 510 620
- PATENT ABSTRACTS OF JAPAN vol. 8, no. 282 (P-323)(1719) 22 December 1984 & JP-A-59-146408

## Description

This invention relates to magneto-optical recording and/or reading apparatus in which an auxiliary magnetic field is applied to a magneto-optical recording medium. In particular, although not exclusively, the invention relates to the use of a permanent magnet for applying the auxiliary magnetic field in a magneto-optical disc system. One such apparatus is known from JP-A-59-146408.

Conventionally, in apparatus of this type the permanent magnet continues to apply the magnetic field to the memory medium for a long time even after the power source of the main unit is switched off. This is because the position of the permanent magnet is not fixed and so it continues to act on the memory medium.

However, in a magneto-optical disc system, it is desirable that when data is written or erased, an auxiliary magnetic field given from outside should be, except when it is necessary, as low as possible. For example, if a magneto-optical disc is left exposed for a long time to a high magnetic field, there is the possibility that the signals recorded on the medium of the disc will deteriorate. Clearly, this is disadvantageous with respect to the reliability of data storage.

The present invention is concerned with the above problem and aims to ensure that an auxiliary magnetic field is not applied to the magneto-optical recording medium when not required.

In accordance with the invention, there is provided magneto-optical recording and/or reading apparatus comprising first means (1a, 1b) for applying an auxiliary magnetic field to a recording medium, and second means (13, 14, 15) for moving said first means so as to change the applied magnetic field in dependence upon whether data is to be recorded on or erased from said medium, characterized by third means (2a, 2b) for moving said first means to a position in which substantially no magnetic field is applied to said medium.

Preferably, the third means comprises a permanent magnet. This provides for automatic return of the first means to a neutral position.

An embodiment of the invention will now be described, by way of example only, with reference to the accompanying drawings, in which:
FIG. 1 is a schematic diagrammatic view showing important features of an apparatus for applying an auxiliary magnetic field in an embodiment of the present invention; and
FIG. 2 is a schematic view showing parts of a magneto-optical disc system.

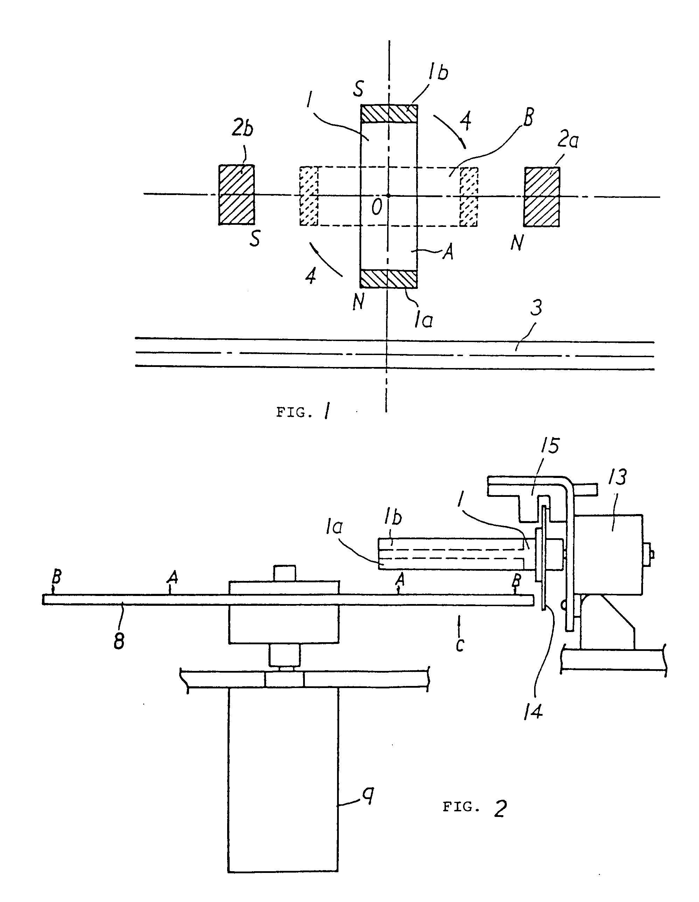

Referring to Fig. 2, a memory medium (magneto-optical disc) 8 comprises a substrate of glass or plastic, and a magnetic thin film made of rare earth metal and transition metal, for example, GdTbFe and TbDyFe. The magnetic thin film is disposed on the portion of the disc which lies between A and B in FIG. 2. (The length of the portion between A and B is called the effective radius). The memory medium 8 is rotatably driven by a motor 9. Permanent magnets 1a and 1b have respective reverse polarities. One of the magnets 1a is provided on the front side of a holder 1 while the other magnet 1b is provided on the rear side of the holder 1. The holder 1 is rotatable by a stepper motor 13 so that the position of the magnets 1a and 1b can be reversed. A disc 14 is fixed to the holder 1, and a hole is formed at a suitable portion of the disc. A position sensor 15 with a built-in photo coupler detects the hole in the disc 14 when the disc 14 is rotated. By the detection of the hole, the position sensor 15 recognizes the positions of the magnets 1a and 1b. The magnets 1a and 1b are rod-shaped, and each has a length which is greater than the aforesaid effective radius of the magnetic thin film of the magneto-optical disc 8. Accordingly, it is not necessary to link the magnets 1a and 1b to the movement of an optical head (not shown) along the radius of the magneto-optical disc, which makes the mechanism simple for applying a magnetic field from outside. In FIG. 2, C shows the direction of a laser beam radiated by the optical head.

Referring to FIG. 1, permanent magnets 2a and 2b, which are the main feature of the present embodiment, are provided in front of and at the rear of the holder 1 in FIG. 2, although the magnets 2a and 2b are not actually shown in FIG. 2. (In FIGS. 1 and 2 like reference numerals designate like elements).

The position A shown by the solid lines in FIG. 1 indicates the position of the holder 1 when writing, reading-out, and the like are carried out with respect to the disc 8.

The position B shown in broken lines indicates a neutral position of the holder 1 when the power source of the apparatus for applying an auxiliary magnetic field is switched off. The magnets 2a and 2b are fixed so that they can attract the magnets 1a and 1b in order to keep this neutral position.

In the position A (when an auxiliary magnetic field is applied), if the power source is switched off, by the attraction of the above-mentioned magnets 2a and 2b, torque acts in the direction of arrow 4 around the point O to automatically return the holder 1 to the neutral magnetic field position B.

Further, even if an external force, for example due to oscillation or impact, acts upon the apparatus when the power source is switched off, the magnets 1a and 1b are maintained in the neutral position.

As is clearly described above, the present embodiment utilizes the attracting power of permanent magnets, which loses almost no energy, and ensures the security of the information written on a magneto-optical disc by automatically returning the magnets 1a and 1b to the neutral position when the power source is switched off, and by keeping the magnets 1a and 1b in the neutral position until the power source is switched on again.

## Claims

1. Magneto-optic recording and/or reading apparatus comprising first means (1a, 1b) for applying an auxiliary magnetic field to a recording medium, and second means (13, 14, 15) for moving said first means so as to change the applied magnetic field in dependence upon whether data is to be recorded on or erased from said medium, characterised by third means (2a, 2b) for moving said first means to a position in which substantially no magnetic field is applied to said medium.

2. Apparatus according to claim 1, wherein said third means comprises a permanent magnet (2a, 2b).

3. Apparatus according to claim 1 or claim 2, wherein said first means comprises a permanent magnet (1a, 1b).

4. Apparatus according to any one of claims 1 to 3, wherein said second means comprises a stepper motor (13).

## Patentansprüche

1. Magnetooptische Aufzeichnungs- und/oder Lesevorrichtung, welche erste Mittel (1a, 1b) für das Aufbringen eines magnetischen Hilfsfeldes auf ein aufzeichnendes Medium und zweite Mittel (13, 14, 15) umfaßt, um die ersten Mittel so zu bewegen, daß das aufgebrachte Magnetfeld in Abhängigkeit davon, ob Daten auf dem aufzeichnenden Medium aufgezeichnet oder davon gelöscht werden sollen, geändert wird, **gekennzeichnet durch** dritte Mittel (2a, 2b) für die Bewegung des ersten Mittels in eine Position, in welcher im wesentlichen kein Magnetfeld auf das Medium aufgebracht wird.

2. Vorrichtung nach Anspruch 1, bei welcher die dritten Mittel einen Permanentmagneten (2a, 2b) umfassen.

3. Vorrichtung nach Anspruch 1 oder 2, bei welcher die ersten Mittel einen Permanentmagneten (1a, 1b) umfassen.

4. Vorrichtung nach irgendeinem der Ansprüche 1 bis 3, bei welcher die zweiten Mittel einen Schrittschaltmotor (13) umfassen.

## Revendications

1. Appareil magnéto-optique d'enregistrement et/ou de lecture comprenant un premier moyen (1a, 1b) d'application d'un champ magnétique auxiliaire à un milieu d'enregistrement et un deuxième moyen (13, 14, 15) de déplacement dudit premier moyen de façon à modifier le champ magnétique appliqué selon qu'une donnée doit être enregistrée sur ledit milieu ou en être effacée, caractérisé par un troisième moyen (2a, 2b) de déplacement dudit premier moyen vers une position dans laquelle sensiblement aucun champ magnétique n'est appliqué audit milieu.

2. Appareil selon la revendication 1, dans lequel ledit troisième moyen comprend un aimant permanent (2a, 2b).

3. Appareil selon la revendication 1 ou la revendication 2, dans lequel ledit premier moyen comprend un aimant permanent (1a, 1b).

4. Appareil selon l'une quelconque des revendications 1 à 3, dans lequel ledit deuxième moyen comprend un moteur pas-à-pas (13).
